# EUROPEAN PATENT SPECIFICATION

(11) **EP 3 346 802 B1**
(45) Date of publication and mention of the grant of the patent: **18.11.2020**
(21) Application number: 18150018.2
(22) Date of filing: 02.01.2018
(51) Int. Cl.: H05B 45/00, H05B 45/37, H05B 45/50

(54) **APPARATUS FOR OPERATING ONE OR MORE LIGHTING DEVICES**
VORRICHTUNG ZUM BETREIBEN EINER ODER MEHRERER BELEUCHTUNGSVORRICHTUNGEN
APPAREIL POUR FAIRE FONCTIONNER UN OU PLUSIEURS DISPOSITIFS D'ÉCLAIRAGE

(30) Priority: 10.01.2017 GB 201700927
(43) Date of publication of application: 11.07.2018
(73) Proprietor: Tridonic GmbH & Co. KG, 6851 Dornbirn (AT)
(72) Inventor: Kelly, Jamie, Tyne & Wear NE29 8AH (GB)
(74) Representative: Rupp, Christian

(56) References cited:
- CN-A- 105 323 923
- CN-U- 205 812 467
- US-A1- 2014 092 646

## Description

The present invention relates to an apparatus for operating one or more lighting devices.

Document CN 105 323 923 A discloses a light emitting diode (LED) intelligent control circuit and a LED lighting device. Document CN 205 812 467 U discloses a LED string control circuit. Document US 2014/092646 A1 discloses a soft switching synchronous quasi resonant converter.

Typically, apparatuses, arranged to operate one or more lighting devices such as light emitting diodes (LEDs), operate with an existing lighting device driver to add emergency capability. An apparatus, arranged to operate the lighting device(s), monitors the mains voltage/current/power/energy, supplied by an external energy or power source respectively and provided further to the lighting device(s), and operates a relay that switches the lighting device driver off during emergency. Such emergency case occurs, for example, when the mains voltage/current/power/energy is no longer available or when the supply of the mains voltage/current/power/energy malfunctions. In the emergency case, the apparatus, arranged to operate lighting device(s), does not obtain the electrical energy (i.e. current, voltage) from the external energy source but from an energy storage device such as battery and provides the electrical energy, obtained from the energy storage device (e.g., battery), to the one or more lighting devices.

Usually, separate components are utilized for providing to the one or more lighting devices the electrical energy: one component arranged to provide to the one or more lighting devices the electrical energy supplied by an external energy source and a further component arranged to provide to the one or more lighting devices the electrical energy supplied by an energy storage device (e.g., a battery).

This, however, is costly, requires complicated wiring of the components of the apparatus for operating one or more lighting devices, and leads to a circuitry for providing electrical energy to one or more lighting devices that is large and requires adequate space.

Thus, an apparatus for operating one or more lighting devices is required that can be manufactured in a cost-effective way, that has a simple structure, and that is small, i.e. does not require a lot of space when installed and used.

In view of the aforesaid, the object of the present invention is to enable an improved operating apparatus arranged to operate one or more lighting devices. Particularly, a provision of an operating apparatus is desired that can be manufactured in a cost-effective way, that has a simple and effective structure, and/or that is small, i.e. does not require a lot of space when installed and used.

The object of the present invention is solved by features of the independent claims. Dependent claims specify further arrangements of the invention.

The present invention is based on the idea to use, in an operating apparatus that operates one or more lighting devices such as LEDs, only one transformer for both a charger, which charges an energy storage device for an emergency case, and a lighting device driver, which provides to one or more lighting devices electrical energy (current, voltage) that is supplied by an external electrical energy source in a normal operation case of the operating apparatus. The transformer is a part of a converter, arranged to convert electrical energy from one voltage level to another. For example, the transformer is a part of a flyback converter, i.e. the operating apparatus is or comprises a flyback converter.

Thus, according to an aspect of the present invention, an operating apparatus is provided that is arranged to operate one or more lighting devices, wherein the operating apparatus comprises: a transformer comprising a primary side and a secondary side, wherein electrical energy is transferred from the primary side to the secondary side of the transformer for operating the one or more lighting devices; a charger arranged on the secondary side of the transformer and configured to charge an energy storage device with the electrical energy, transferred from the primary side to the secondary side of the transformer; a lighting device driver arranged on the secondary side of the transformer and configured to deliver to the one or more lighting devices the electrical energy, transferred from the primary side to the secondary side of the transformer.

According to an embodiment of the present invention, the charger and the lighting device driver are connected to the secondary side of the transformer.

According to the present invention, the primary side of the transformer comprises a primary winding and the secondary side of the transformer comprises at least one secondary winding; and the charger and the lighting device driver are connected to the at least one secondary winding of the transformer.

According to an embodiment of the present invention, the secondary side of the transformer comprises at least two secondary windings; and the charger and the lighting device driver are connected to different secondary windings of the transformer.

According to an embodiment of the present invention, the secondary winding is a tapped secondary winding; the charger and the lighting device driver are connected to the tapped secondary winding; and the charger and/or the lighting device driver are/is connected to a respective point of the tapped secondary winding.

According to an embodiment of the present invention, the electrical energy, transferred from the primary side to the secondary side of the transformer, is selectively and/or alternately provided to the charger or to the lighting device driver.

According to an embodiment of the present invention, the charger and the lighting device driver are operated selectively and/or alternately.

According to an embodiment of the present invention, the charger comprises a charger switch configured to switch on or off the transfer of the electrical energy to the charger.

According to an embodiment of the present invention, the lighting device driver comprises: a main capacitor, which is configured to transfer electrical energy to the one or more lighting devices when the electrical energy flows through the primary side of the transformer and is stored in the transformer; and a main capacitor isolating switch, which is configured to isolate the main capacitor from the charger when the charger charges the energy storage device with the electrical energy, transferred from the primary side to the secondary side of the transformer.

According to an embodiment of the present invention, if a lighting device voltage, flowing through the one or more lighting devices, is greater than an energy storage device voltage, the operating apparatus is configured to connect the one or more lighting devices to a negative terminal of the energy storage device; and if the lighting device voltage, flowing through the one or more lighting devices, is smaller than the energy storage device voltage, the operating apparatus is configured to connect the one or more lighting devices to a positive terminal of the energy storage device.

According to an embodiment of the present invention, the operating apparatus comprises an isolation barrier between the one or more lighting devices and the energy storage device.

According to an embodiment of the present invention, the operating apparatus is a flyback converter and the transformer is a transformer of the flyback converter.

According to an embodiment of the present invention, the operating apparatus comprises one or more outputs, to which the one or more lighting devices are directly or indirectly connectable and which are configured to provide the electrical energy to the one or more lighting devices.

According to an embodiment of the present invention, the operating apparatus is operated in a normal operation mode and in an emergency operation mode; wherein, in the normal operation mode, the electrical energy is provided to the one or more lighting devices via the lighting device driver; and wherein, in the emergency operation mode, the electrical energy is provided to the one or more lighting devices via the energy storage device.

The above-described aspects and implementation forms of the present invention will be explained in the following description of specific embodiments in relation to the enclosed drawings, in which
- Fig. 1: an operating apparatus according to an embodiment of the present invention.
- Fig. 2: an operating apparatus according to an embodiment of the present invention.
- Fig. 3: an operating apparatus according to an embodiment of the present invention.

Generally, it has to be noted that all arrangements, devices, modules, components, models, elements, units, entities, and means and so forth described in the present application could be implemented by software or hardware elements or any kind of combination thereof. All steps which are performed by the various entities described in the present application as well as the functionality described to be performed by the various entities are intended to mean that the respective entity is adapted to or configured to perform the respective steps and functionalities. Even if in the following description of the specific embodiments, a specific functionality or step to be performed by a general entity is not reflected in the description of a specific detailed element of the entity which performs the specific step or functionality, it should be clear for a skilled person that these methods and functionalities can be implemented in respective hardware or software elements, or any kind of combination thereof. Further, the method of the present invention and its various steps are embodied in the functionalities of the various described apparatus elements.

Moreover, any of the embodiments and features of any of the embodiments, described herein, may be combined with each other, unless a combination is explicitly excluded.

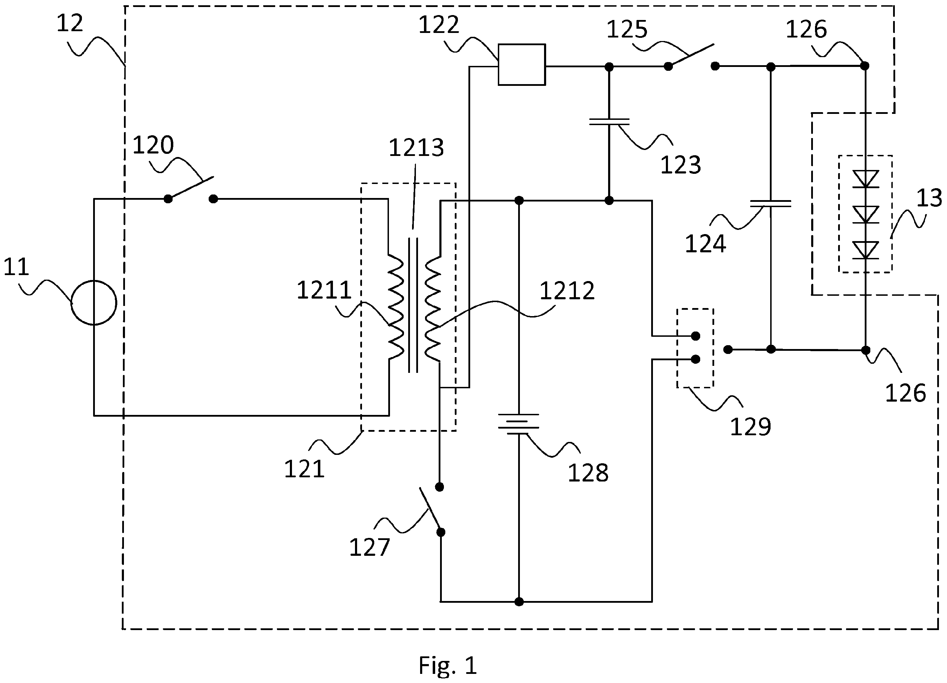

Fig. 1 shows an operating apparatus 12 according to an embodiment of the present invention.

According to the present embodiment, the operating apparatus 12 comprises a transformer 121, a charger 127, 128, and a lighting device driver 122, 125, 123, 124. Further, the apparatus 12 comprises outputs 126 that are connectable to one or more lighting devices 13 for providing electrical energy (e.g., current, voltage) to the one or more lighting devices 13. The charger switch 127 may be formed by a MOSFET and may comprise an integrated body diode. The charger switch may be formed by a bipolar transistor or an IGBT. There may be an antiparallel diode in parallel to the charger switch 127.

The connection of the operating apparatus 12 to the one or more lighting devices 13 may be a direct connection or an indirect connection. In the case of a direct connection, no further components are present between the operating apparatus 12 and the one or more lighting devices 13. In the case of an indirect connection, further components are present between the operating apparatus 12 and the one or more lighting devices 13.

Further, the operating apparatus 12 is connected to an external electrical energy source 11, i.e. an external energy source 11. Also here, the connection between the operating apparatus 12 and the external electrical energy source 11 may be a direct or indirect connection.

Thus, the operating apparatus 12 obtains, in a normal operation mode of the operating apparatus 12, the electrical energy (e.g., current, voltage) from the external energy source 11 and provides the obtained electrical energy to the one or more lighting devices 13. The provision of the electrical energy to the one or more lighting devices 13 is done via the output (s) 126 of the operating apparatus.

The operating apparatus 12 comprises a transformer 121, via which the electrical energy obtained from the external energy source 11 is provided to the one or more lighting devices 13. The transformer 121 comprises a primary side 1211 and a secondary side 1212. According to the present embodiment, the primary side 1211 and the secondary side 1212 are galvanically isolated 1213. The electrical energy obtained from the external energy source 11 is transferred from the primary side 1211 to the secondary side 1212 of the transformer 121.

According to the present embodiment, the primary side 1211 of the transformer 121 comprises at least one primary winding 1211, and the secondary side 1212 of the transformer 121 comprises at least one secondary winding 1212.

First, the electrical energy (e.g., voltage, current) is transferred via the primary side 1211 (i.e. via the primary winding 1211) and stored in the transformer 121. The storage of the electrical energy is done by the galvanic isolation 1213. Then, the electrical energy, stored via the galvanic isolation, is supplied to the secondary side 1212 (i.e. to the secondary winding 1212) of the transformer.

According to the present embodiment, the operating apparatus 12 is a flyback converter, and the transformer 121 is a transformer of the flyback converter 12.

Thus, by the transformer 121, also the operating apparatus or flyback converter 12 respectively is divided into a primary side and a secondary side. The primary side of the operating apparatus or flyback converter 12 respectively comprises components of the operating apparatus or flyback converter 12 respectively that are arranged before the transformer 121. Additionally, the primary side of the operating apparatus or flyback converter 12 respectively comprises the primary side 1211 of the transformer 121. The secondary side of the operating apparatus or flyback converter 12 respectively comprises components of the operating apparatus or flyback converter 12 respectively that are arranged after the transformer 121. Additionally, the secondary side of the operating apparatus or flyback converter 12 respectively comprises the secondary side 1212 of the transformer 121.

The operation of the flyback converter 12 is well known. As shown in Fig. 1, the operating apparatus or flyback converter 12 respectively comprises on its primary side a switch 120. When the switch 120 is closed (i.e. ON and conductive), the transformer 121 and, particularly, the primary side 1211 of the transformer 121 is connected to the external energy source 11. The electrical energy is supplied from the external energy source 11 to the transformer 121 and, particularly, the primary side 1211 of the transformer 121. The energy (i.e. current, voltage) and magnetic flux in the transformer 121 increases, storing energy in the transformer 121, particularly, in the galvanic isolation 1213 of the transformer 121. The energy (i.e. current, voltage) induced in the secondary side 1212 is negative, so a diode 122 on the secondary side of the operating device or flyback converter 12 respectively is reverse biased (i.e. blocked). In case that instead the diode a switch 122 is used, the switch 122 is open (i.e. is OFF and non-conductive). Thus, no electrical energy flows through the secondary side of the operating device or flyback converter 12 respectively.

When the switch 120 of the primary side of the operating device or flyback converter 12 is opened (i.e. is OFF and non-conductive), the energy transfer from the external energy source 11 is stopped. The energy (current, voltage) on the primary side 1211 of the transformer 121 and the magnetic flux drops. The energy (current, voltage) on the secondary side 1212 becomes positive. Thus, the diode 122 is forward biased (i.e. is not blocked), or, in case that instead the diode a switch 122 is used, the switch 122 is closed (i.e. is ON and non-conductive). In this way, the electrical energy is allowed to flow from the transformer 121 to the one or more lighting devices 13 (e.g., LEDs).

When the electrical energy (current, voltage) flows to the one or more lighting devices 13, electrical energy is stored in a main capacitor 124 of the secondary side of the operating apparatus or flyback converter 12 respectively. The energy, stored in the main capacitor 124 is provided to the one or more lighting devices 13 when the switch 120 is closed (i.e. is ON and conductive) and, thus, when no electrical energy flows from the transformer 121 to the one or more lighting devices 13.

The above described ON- and OFF-phases of the switch 120 of the primary side of the operating apparatus or flyback converter 12 respectively are repeated alternately. The switching of the switch 120 can be controlled by a controlling entity. The controlling entity is not shown in Fig. 1. However, this way of controlling the switch 120 is well known and is, therefore, not described in more detail herein.

As becomes apparent from the aforesaid, the operating apparatus or flyback converter 12 respectively comprises a lighting device driver arranged on the secondary side of the transformer 121 and, thus, also on the secondary side of the operating apparatus or flyback converter 12 respectively. The lighting device driver is configured to deliver to the one or more lighting devices 13 the electrical energy (current, voltage), transferred from the primary side 1211 to the secondary side 1212 of the transformer 121, i.e. from the primary side of the operating apparatus or flyback converter 12 to the secondary side of the operating apparatus or flyback converter 12. Thus, the lighting device driver provides to the one or more lighting devices electrical energy supplied by the external energy source 11. The lighting device driver comprises according to the present embodiment at least the diode or switch 122 and the main capacitor 124. Additionally, the lighting device driver comprises according to the present embodiment at least the capacitor 123 and the switch 125.

In comparison to a typical flyback converter, the operating device or flyback converter 12 respectively of the present embodiment comprises on its secondary side, besides the lighting device driver, also a charger. The charger comprises, according to the present embodiment, a charger switch 127 and an electrical energy storage device 128 such as a battery. The charger is arranged to charge the energy storage device 128 with electrical energy, transferred from the primary side 1211 to the secondary side 1212 of the transformer 121.

Thus, both the charger and the lighting device driver are connected to the secondary side 1212 of the transformer 121. Particularly, as shown in Fig. 1, both the charger and the lighting device driver are connected to the secondary winding 1212 of the transformer 121.

The electrical energy (current, voltage), transferred from the primary side 1211 to the secondary side 1212 of the transformer 121 is selectively and/or alternately provided to the charger or to the lighting device driver. The charger and the lighting device driver are, thus, operated selectively and/or alternately.

According to the present embodiment, the charger switch 127 is arranged to switch on or off the transfer of the electrical energy to the charger.

If the charger switch 127 is closed (i.e. is ON and is conductive), the electrical energy supplied via the transformer 121 is supplied to the energy storage device 128 such as battery. Thus, the energy storage device 128 is charged.

If the charger switch 127 is open (i.e. is OFF and is not conductive), no electrical energy is supplied to the energy storage device 128, thus, no charging of the energy storage device 128 is executed.

If the charger switch 127 is open (i.e. is OFF and is not conductive) and if electrical energy, supplied via the transformer 121 from the external energy source 11, flows through the secondary side of the operating apparatus or flyback converter 12 respectively (because switch 120 is open (i.e. is OFF and is not conductive)), the charger is deactivated but the lighting device driver is activated. Thus, the electrical energy, supplied via the transformer 121, is used to operate, i.e. to provide energy (current, voltage) to the one or more lighting devices 13 as described above.

The switching of the charger switch 127 can also be done by a respective controlling entity, for example. The switching of the charger switch 127 can be done, for example, according to demand, e.g., according to the charging level of the energy storage device 128.

According to the arrangement of the operating apparatus or flyback converter 12 respectively of the present embodiment, when the charger is active, i.e. when the charger switch 127 is closed (i.e. is ON and is conductive) and the energy storage device 128 is charged, a high energy amount (voltage, power) occurs across the capacitor 123 (e.g., of the order of 100 V for a winding ratio 4:1). To isolate this from the main capacitor 124, the switch 125 is used as a main capacitor isolating switch. Thus, the main capacitor isolating switch 125 is opened (i.e. is OFF and not conductive) when the charging of the energy storage device 128 is executed such that no energy flows to the main capacitor 124. The one or more lighting devices 13 are supplied with energy (current, voltage) stored in the main capacitor 124, and no disturbing of this energy supply occurs. The main capacitor isolating switch is closed (i.e. is ON and conductive) when no charging of the energy storage device is executed, i.e. when the charger switch is open (i.e. is OFF and not conductive). Thus, when the lighting device driver operates, the charger switch 127 is open (i.e. is OFF and non-conducting).

Further, according to the present embodiment, if a lighting device voltage, flowing through the one or more lighting devices 13, is greater than an energy storage device voltage (i.e. voltage of the energy storage device 128), the operating apparatus 12 is configured to connect the one or more lighting devices 13 to a negative terminal of the energy storage device 128. If the lighting device voltage is smaller than the energy storage device voltage, the operating apparatus 12 is configured to connect the one or more lighting devices 13 to a positive terminal of the energy storage device 128. The positive and negative terminals of the energy storage device 128 are indicated in Fig. 1 by the reference sign 129.

By the above-described arrangement of the operating apparatus or flyback converter 12 respectively, a simplified arrangement of the operating apparatus 12 is provided that is nevertheless effective. Further, additional components, e.g. further converters are saved because the transformer 121 is used for both supplying energy to the lighting device(s) 13 and charging the energy storage device 128.

In view of the aforesaid, the operating apparatus or flyback converter 12 respectively is arranged for operation in two modes: in a normal operation mode and in an emergency operation mode. In the normal operation mode, the operating apparatus 12 provides to the one or more lighting devices 13 electrical energy directly received from the external energy supply device 11. Thus, the electrical energy is supplied via the lighting device driver. In the emergency operation mode, the operating apparatus 12 provides to the one or more lighting devices 13 electrical energy stored in the energy storage device 128. Usually, the operating apparatus 12 operates in the normal operation mode. The operating apparatus 12 switches its operating to the emergency operating mode in case of a malfunction, break and/or termination of the electrical energy supply from the external energy source 11. The operating apparatus 12 switches back to the operating in the normal operation mode if the energy supply from the external energy source 11 has been restored, i.e. the energy supply from the external energy source 11 functions in a usual/normal way as desired/required.

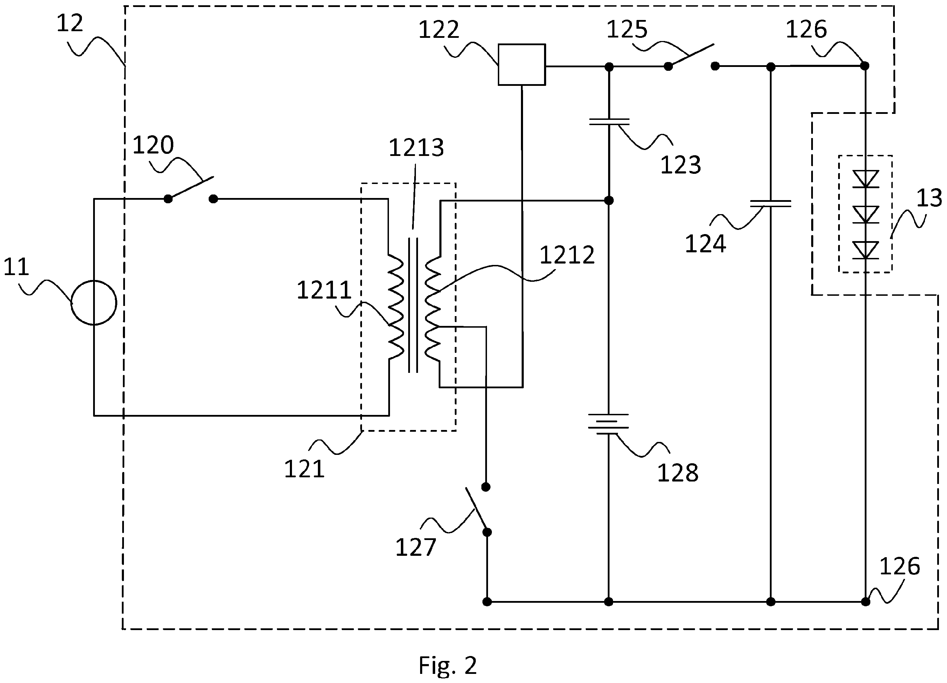

Fig. 2 shows an operating 12 apparatus according to an embodiment of the present invention. The embodiment of Fig. 2 is based on the embodiment of Fig. 1. Therefore, the aforesaid applies also to the embodiment of Fig. 2. The arrangement of the operating apparatus 12 of Fig. 2 differs from the arrangement of the operating apparatus 12 of Fig. 1 in that a tapped secondary side 1212 of the transformer 112 and, particularly, a tapped secondary winding 1212 of the transformer 112 is provided. The tapped secondary winding 1212 is tapped for connecting the charger and the lighting device driver to the secondary winding 1212.

The embodiment of Fig. 2, shows an arrangement where the second winding 1212 of the transformer 112 is tapped at a point between the ends of the second winding 1212 to provide electric energy to the charger. This construction allows avoidance of too high voltages at the one or more lighting devices.

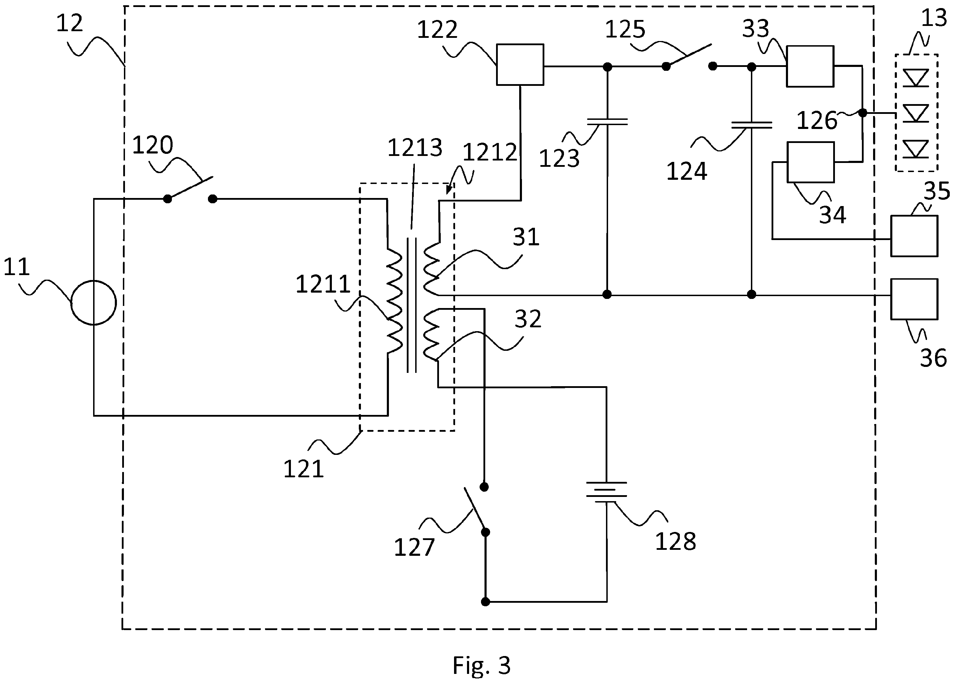

Fig. 3 shows an operating apparatus 12 according to an embodiment of the present invention. The embodiment of Fig. 3 is based on the embodiment of Fig. 1. Therefore, the aforesaid applies also to the embodiment of Fig. 3. The arrangement of the operating apparatus 12 of Fig. 3 differs from the arrangement of the operating apparatus 12 of Fig. 1 in that an isolation barrier is provided between the energy storage device 128 and the one or more lighting devices 13. Thus, the energy storage device 128 and the one or more lighting devices are electrically isolated from each other.

The isolation barrier is provided, according to the present embodiment, in that the secondary side 1212 of the transformer 121 comprises at least two secondary windings 31, 32, and the charger and the lighting device driver are connected/attached to different secondary windings 31, 32.

According to the present embodiment, the lighting device driver is connected/attached to a first secondary winding 31, and the charger is connected/attached to a second secondary winding 32.

Further, according to the present embodiment two diodes 33, 34 or two switches 33, 34 are provided. The diode or switch 34 is arranged to prevent a reverse power being fed back into terminals of mains driver 35.

The lower line, connected to the first secondary winding 31 is connected to mains driver 35 or to one or more lighting devices 13. This is visualized by a connection to an element 36, which represents the mains driver 35 or the one or more lighting devices 13.

Thus, as shown above, the present invention allows a reduction of number of components for implementing an operating apparatus 12 that is capable of being operated in the normal operation mode and the emergency operation mode. The operating apparatus 12 is manufacturable in a cost-effective way. Further, structure of the operating apparatus 12 is simple but at the same time very effective. Additionally, the operating apparatus 12 has a reduced size in comparison to most of known operating apparatuses 12. Hence, its implementation does not require a lot of space.

Consequently, an improved operating apparatus 12 is provided for operating one or more lighting devices 13.

The invention has been described in conjunction with various embodiments herein. However, other variations to the enclosed embodiments can be understood and effected by those skilled in the art and practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

### List of reference signs

11 electrical energy source
12 operating apparatus
120 switch
121 transformer
1211 primary side of the transformer/primary winding of the transformer
1212 secondary side of the transformer/secondary winding of the transformer
1213 galvanic isolation
122 diode or switch
123 capacitor
124 main capacitor
125 main capacitor isolating switch
126 output
127 charger switch
128 energy storage device
129 positive and negative terminals of the energy storage device
13 one or more lighting devices such as LEDs
31 first secondary winding
32 second secondary winding
33 diode or switch
34 diode or switch
35 mains driver
36 mains driver or one or more lighting devices

## Claims

1. An operating apparatus (12) arranged to operate one or more lighting devices (13), wherein the operating apparatus (12) comprises:
- a converter comprising a transformer (121) comprising a primary side and a secondary side, wherein electrical energy is transferred from the primary side to the secondary side of the transformer (121) for operating the one or more lighting devices;
- a charger comprising an energy storage device (128), wherein the charger is arranged on the secondary side of the transformer (121), connected to the secondary winding (1212) of the transformer (121) and is configured to charge the energy storage device (128) with the electrical energy, transferred from the primary side to the secondary side of the transformer (121);
- a lighting device driver (122, 123, 124, 125) arranged on the secondary side of the transformer (121) and configured to deliver to the one or more lighting devices (13) the electrical energy, transferred from the primary side to the secondary side of the transformer (121), wherein:
- the primary side of the transformer (121) comprises a primary winding (1211) and the secondary side of the transformer comprises at least one secondary winding (1212); and
- the charger and the lighting device driver (122, 123, 124, 125) are connected to the at least one secondary winding (1212) of the transformer (121),
- wherein the charger comprises a charger switch (127) configured to switch on or off the transfer of the electrical energy to the charger and
- wherein the lighting device driver (122, 123, 124, 125) comprises:
- a switch or diode (122) connecting the secondary winding (1211) with a capacitor (123),
- a main capacitor (124), which is configured to transfer electrical energy to the one or more lighting devices (13) when the electrical energy flows through the primary side of the transformer (121) and is stored in the transformer (121); and
- a main capacitor isolating switch (125), which is configured to isolate the main capacitor (124) from the capacitor (123) when the charger charges the energy storage device (128) with the electrical energy, transferred from the primary side to the secondary side of the transformer (121).

2. The operating apparatus (12) according to claim 1, wherein:
- the secondary side of the transformer (121) comprises at least two secondary windings (31, 32); and
- the charger and the lighting device driver (122, 123, 124, 125) are connected to different secondary windings of the transformer (121).

3. The operating apparatus according to claim 1, wherein:
- the secondary winding (1212) is a tapped secondary winding;
- the charger and the lighting device driver (122, 123, 124, 125) are connected to the tapped secondary winding (1212); and
- the secondary winding (1212) is tapped at a point between the ends of the secondary winding (1212) to provide electrical energy to the charger.

4. The operating apparatus (12) according to any one of the preceding claims, wherein the electrical energy, transferred from the primary side to the secondary side of the transformer (121), is selectively and/or alternately provided to the charger or to the lighting device driver (122, 123, 124, 125).

5. The operating apparatus (12) according to any one of the preceding claims, wherein the charger and the lighting device driver (122, 123, 124, 125) are operated selectively and/or alternately.

6. The operating apparatus (12) according to any one of the preceding claims, wherein:
- if a lighting device voltage, flowing through the one or more lighting devices (13), is greater than an energy storage device voltage, the operating apparatus (12) is configured to connect the one or more lighting devices (13) to a negative terminal of the energy storage device (128); and
- if the lighting device voltage, flowing through the one or more lighting devices (13), is smaller than the energy storage device voltage, the operating apparatus (12) is configured to connect the one or more lighting devices (13) to a positive terminal of the energy storage device (128).

7. The operating apparatus (12) according to any one of the preceding claims, wherein the operating apparatus (12) comprises an isolation barrier between the one or more lighting devices (13) and the energy storage device (128).

8. The operating apparatus (12) according to any one of the preceding claims, wherein the operating apparatus (12) is a flyback converter and the transformer (121) is a transformer of the flyback converter.

9. The operating apparatus (12) according to any one of the preceding claims, wherein the operating apparatus (12) comprises one or more outputs (126), to which the one or more lighting devices (13) are directly or indirectly connectable and which are configured to provide the electrical energy to the one or more lighting devices (13).

10. The operating apparatus (12) according to any one of the preceding claims, wherein:
the operating apparatus (12) is operated in a normal operation mode and in an emergency operation mode;
in the normal operation mode, the electrical energy is provided to the one or more lighting devices (13) via the lighting device driver (122, 123, 124, 125); and
in the emergency operation mode, the electrical energy is provided to the one or more lighting devices (13) via the energy storage device (128).

## Patentansprüche

1. Betriebseinrichtung (12), die angeordnet ist, um eine oder mehrere Beleuchtungsvorrichtungen (13) zu betreiben, wobei die Betriebseinrichtung (12) umfasst:
- einen Wandler, der einen Transformator (121) umfasst, der eine Primärseite und eine Sekundärseite umfasst, wobei elektrische Energie von der Primärseite zu der Sekundärseite des Transformators (121) übertragen wird, um die eine oder die mehreren Beleuchtungsvorrichtungen zu betreiben;
- eine Ladeeinheit, die eine Energiespeichervorrichtung (128) umfasst, wobei die Ladeeinheit auf der Sekundärseite des Transformators (121) angeordnet ist, mit der Sekundärwicklung (1212) des Transformators (121) verbunden ist und konfiguriert ist, um die Energiespeichervorrichtung (128) mit der elektrischen Energie zu laden, die von der Primärseite zu der Sekundärseite des Transformators (121) übertragen wird;
- einen Beleuchtungsvorrichtungstreiber (122, 123, 124, 125), der auf der Sekundärseite des Transformators (121) angeordnet ist und konfiguriert ist, um der einen oder den mehreren Beleuchtungsvorrichtungen (13) die elektrische Energie zuzuführen, die von der Primärseite zu der Sekundärseite des Transformators (121) übertragen wird, wobei:
- die Primärseite des Transformators (121) eine Primärwicklung (1211) umfasst und die Sekundärseite des Transformators mindestens eine Sekundärwicklung (1212) umfasst; und
- die Ladeeinheit und der Beleuchtungsvorrichtungstreiber (122, 123, 124, 125) mit der mindestens einen Sekundärwicklung (1212) des Transformators (121) verbunden sind,
- wobei die Ladeeinheit einen Ladeeinheitschalter (127) umfasst, der konfiguriert ist, um die Übertragung der elektrischen Energie zu der Ladeeinheit ein- oder auszuschalten, und
- wobei der Beleuchtungsvorrichtungstreiber (122, 123, 124, 125) umfasst:
- einen Schalter oder eine Diode (122), der/die die
Sekundärwicklung (1211) mit einem Kondensator (123) verbindet,
- einen Hauptkondensator (124), der konfiguriert ist, um elektrische Energie zu der einen oder den mehreren Beleuchtungsvorrichtungen (13) zu übertragen, wenn die elektrische Energie durch die Primärseite des Transformators (121) fließt und in dem Transformator (121) gespeichert ist; und
- einen Hauptkondensator-Trennschalter (125), der konfiguriert ist, um den Hauptkondensator (124) von dem Kondensator (123) zu trennen, wenn die Ladeeinheit die Energiespeichervorrichtung (128) mit der elektrischen Energie lädt, die von der Primärseite zu der Sekundärseite des Transformators (121) übertragen wird.

2. Betriebseinrichtung (12) nach Anspruch 1, wobei:
- die Sekundärseite des Transformators (121) mindestens zwei Sekundärwicklungen (31, 32) umfasst; und
- die Ladeeinheit und der Beleuchtungsvorrichtungstreiber (122, 123, 124, 125) mit unterschiedlichen Sekundärwicklungen des Transformators (121) verbunden sind.

3. Betriebseinrichtung nach Anspruch 1, wobei:
- die Sekundärwicklung (1212) eine abgegriffene Sekundärwicklung ist;
- die Ladeeinheit und der Beleuchtungsvorrichtungstreiber (122, 123, 124, 125) mit der abgegriffenen Sekundärwicklung (1212) verbunden sind; und
- die Sekundärwicklung (1212) an einem Punkt zwischen den Enden der Sekundärwicklung (1212) abgegriffen wird, um der Ladeeinheit elektrische Energie bereitzustellen.

4. Betriebseinrichtung (12) nach einem der vorstehenden Ansprüche, wobei die von der Primärseite zu der Sekundärseite des Transformators (121) übertragene elektrische Energie selektiv und/oder abwechselnd der Ladeeinheit oder dem Beleuchtungsvorrichtungstreiber (122, 123, 124, 125) bereitgestellt wird.

5. Betriebseinrichtung (12) nach einem der vorstehenden Ansprüche, wobei die Ladeeinheit und der Beleuchtungsvorrichtungstreiber (122, 123, 124, 125) selektiv und/oder abwechselnd betrieben werden.

6. Betriebseinrichtung (12) nach einem der vorstehenden Ansprüche, wobei:
- wenn eine Beleuchtungsvorrichtungsspannung, die durch die eine oder die mehreren Beleuchtungsvorrichtungen (13) fließt, größer als eine Energiespeichervorrichtungsspannung ist, die Betriebseinrichtung (12) konfiguriert ist, um die eine oder die mehreren Beleuchtungsvorrichtungen (13) mit einem negativen Anschluss der Energiespeichervorrichtung (128) zu verbinden; und
- wenn die Beleuchtungsvorrichtungsspannung, die durch die eine oder die mehreren Beleuchtungsvorrichtungen (13) fließt, kleiner als die Energiespeichervorrichtungsspannung ist, die Betriebseinrichtung (12) konfiguriert ist, um die eine oder die mehreren Beleuchtungsvorrichtungen (13) mit einem positiven Anschluss der Energiespeichervorrichtung (128) zu verbinden.

7. Betriebseinrichtung (12) nach einem der vorstehenden Ansprüche, wobei die Betriebseinrichtung (12) eine Isolationsbarriere zwischen der einen oder den mehreren Beleuchtungsvorrichtungen (13) und der Energiespeichereinrichtung (128) umfasst.

8. Betriebseinrichtung (12) nach einem der vorstehenden Ansprüche, wobei die Betriebseinrichtung (12) ein Sperrwandler ist und der Transformator (121) ein Transformator des Sperrwandlers ist.

9. Betriebseinrichtung (12) nach einem der vorstehenden Ansprüche, wobei die Betriebseinrichtung (12) einen oder mehrere Ausgänge (126) umfasst, mit denen die eine oder die mehreren Beleuchtungsvorrichtungen (13) direkt oder indirekt verbindbar sind und die dazu konfiguriert sind, der einen oder den mehreren Beleuchtungsvorrichtungen (13) die elektrische Energie bereitzustellen.

10. Betriebseinrichtung (12) nach einem der vorstehenden Ansprüche, wobei:
die Betriebseinrichtung (12) in einem Normalbetriebsmodus und in einem Notbetriebsmodus betrieben wird;
in dem Normalbetriebsmodus die elektrische Energie der einen oder den mehreren Beleuchtungsvorrichtungen (13) über den Beleuchtungsvorrichtungstreiber (122, 123, 124, 125) bereitgestellt wird; und
in dem Notbetriebsmodus die elektrische Energie der einen oder den mehreren Beleuchtungsvorrichtungen (13) über die Energiespeichervorrichtung (128) bereitgestellt wird.

## Revendications

1. Appareil d'exploitation (12) agencé pour exploiter un ou plusieurs dispositifs d'éclairage (13), dans lequel l'appareil d'exploitation (12) comprend :
- un convertisseur comprenant un transformateur (121) comprenant un côté primaire et un côté secondaire, dans lequel de l'énergie électrique est transférée du côté primaire au côté secondaire du transformateur (121) pour exploiter le ou les dispositifs d'éclairage ;
- un chargeur comprenant un dispositif de stockage d'énergie (128), dans lequel le chargeur est agencé sur le côté secondaire du transformateur (121), connecté à l'enroulement secondaire (1212) du transformateur (121) et est configuré pour charger le dispositif de stockage d'énergie (128) avec l'énergie électrique, transférée du côté primaire au côté secondaire du transformateur (121) ;
- un circuit d'attaque de dispositif d'éclairage (122, 123, 124, 125) agencé sur le côté secondaire du transformateur (121) et configuré pour distribuer au ou aux dispositifs d'éclairage (13) l'énergie électrique, transférée du côté primaire au côté secondaire du transformateur (121), dans lequel :
- le côté primaire du transformateur (121) comprend un enroulement primaire (1211) et le côté secondaire du transformateur comprend au moins un enroulement secondaire (1212) ; et
- le chargeur et le circuit d'attaque de dispositif d'éclairage (122, 123, 124, 125) sont connectés à l'au moins un enroulement secondaire (1212) du transformateur (121),
- dans lequel le chargeur comprend un commutateur de chargeur (127) configuré pour commuter sur marche ou arrêt le transfert de l'énergie électrique vers le chargeur et
- dans lequel le circuit d'attaque de dispositif d'éclairage (122, 123, 124, 125) comprend :
- un commutateur ou une diode (122) connectant l'enroulement secondaire (1211) à un condensateur (123),
- un condensateur principal (124), qui est configuré pour transférer de l'énergie électrique au ou aux dispositifs d'éclairage (13) lorsque l'énergie électrique circule à travers le côté primaire du transformateur (121) et est stockée dans le transformateur (121) ; et
- un sectionneur de condensateur principal (125), qui est configuré pour isoler le condensateur principal (124) par rapport au condensateur (123) lorsque le chargeur charge le dispositif de stockage d'énergie (128) avec l'énergie électrique transférée du côté primaire au côté secondaire du transformateur (121).

2. Appareil d'exploitation (12) selon la revendication 1, dans lequel :
- le côté secondaire du transformateur (121) comprend au moins deux enroulements secondaires (31, 32) ; et
- le chargeur et le circuit d'attaque de dispositif d'éclairage (122, 123, 124, 125) sont connectés à différents enroulements secondaires du transformateur (121).

3. Appareil d'exploitation selon la revendication 1, dans lequel :
- l'enroulement secondaire (1212) est un enroulement secondaire à branchement ;
- le chargeur et le circuit d'attaque de dispositif d'éclairage (122, 123, 124, 125) sont connectés à l'enroulement secondaire à branchement (1212) ; et
- l'enroulement secondaire (1212) est branché à un point entre les extrémités de l'enroulement secondaire (1212) pour fournir de l'énergie électrique au chargeur.

4. Appareil d'exploitation (12) selon l'une quelconque des revendications précédentes, dans lequel l'énergie électrique, transférée du côté primaire au côté secondaire du transformateur (121), est fournie de façon sélective et/ou alternée au chargeur ou au circuit d'attaque de dispositif d'éclairage (122, 123, 124, 125).

5. Appareil d'exploitation (12) selon l'une quelconque des revendications précédentes, dans lequel le chargeur et le circuit d'attaque de dispositif d'éclairage (122, 123, 124, 125) sont exploités de façon sélective et/ou alternée.

6. Appareil d'exploitation (12) selon l'une quelconque des revendications précédentes, dans lequel :
- si une tension de dispositif d'éclairage, circulant à travers le ou les dispositifs d'éclairage (13), est supérieure à une tension de dispositif de stockage d'énergie, l'appareil d'exploitation (12) est configuré pour connecter le ou les dispositifs d'éclairage (13) à une borne négative du dispositif de stockage d'énergie (128) ; et
- si la tension de dispositif d'éclairage, circulant à travers le ou les dispositifs d'éclairage (13), est inférieure à la tension de dispositif de stockage d'énergie, l'appareil d'exploitation (12) est configuré pour connecter le ou les dispositifs d'éclairage (13) à une borne positive du dispositif de stockage d'énergie (128).

7. Appareil d'exploitation (12) selon l'une quelconque des revendications précédentes, dans lequel l'appareil d'exploitation (12) comprend une barrière d'isolation entre le ou les dispositifs d'éclairage (13) et le dispositif de stockage d'énergie (128).

8. Appareil d'exploitation (12) selon l'une quelconque des revendications précédentes, dans lequel l'appareil d'exploitation (12) est un convertisseur à transfert indirect et le transformateur (121) est un transformateur du convertisseur à transfert indirect.

9. Appareil d'exploitation (12) selon l'une quelconque des revendications précédentes, dans lequel l'appareil d'exploitation (12) comprend une ou plusieurs sorties (126), auxquelles le ou les dispositifs d'éclairage (13) peuvent être directement ou indirectement connectés et qui sont configurées pour fournir l'énergie électrique au ou aux dispositifs d'éclairage (13).

10. Appareil d'exploitation (12) selon l'une quelconque des revendications précédentes, dans lequel :
l'appareil d'exploitation (12) est exploité dans un mode d'exploitation normal et dans un mode d'exploitation d'urgence ;
dans le mode d'exploitation normal, l'énergie électrique est fournie au ou aux dispositifs d'éclairage (13) par l'intermédiaire du circuit d'attaque de dispositif d'éclairage (122, 123, 124, 125) ; et
dans le mode d'exploitation d'urgence, l'énergie électrique est fournie au ou aux dispositifs d'éclairage (13) par l'intermédiaire du dispositif de stockage d'énergie (128).
